Europäisches Patentamt

European Patent Office

Office européen des brevets

(19)

(11) Veröffentlichungsnummer: **0 356 957**
**A2**

(12) **EUROPÄISCHE PATENTANMELDUNG**

(21) Anmeldenummer: **89115829.7**

(22) Anmeldetag: **28.08.89**

(51) Int. Cl.5: **B29C 47/90 , B29C 47/88 ,**
**//B29L23:22**

(30) Priorität: **29.08.88 DE 3829234**

(43) Veröffentlichungstag der Anmeldung:
**07.03.90 Patentblatt 90/10**

(84) Benannte Vertragsstaaten:
**AT BE CH DE ES FR GB IT LI NL SE**

(71) Anmelder: **JOSEF NITTEL GMBH & CO. KG**
**Kelsterbacher Strasse 18**
**D-6096 Raunheim/Main(DE)**

(72) Erfinder: **Marx, Dieter**
**Armenruhstrasse 30**
**D-6200 Wiesbaden(DE)**

(74) Vertreter: **Schaefer, Gerhard, Dr.**
**Seitnerstrasse 13**
**D-8023 Pullach(DE)**

(54) **Verfahren und Vorrichtung zur Herstellung von Schlauchfolien.**

(57) Bei einem Verfahren zur Herstellung von Schlauchfolien, bei dem eine thermoplastische geschmolzene Kunststoffmasse durch eine ringförmige Düse extrudiert und die extrudierte Masse unter Bildung einer Blase durch einen Kühlring gekühlt wird, wobei die bereits abgekühlte Blase durch Quetschwalzen zusammengedrückt wird, wird der Durchmesser der bereits abgekühlten Blase in einem einstellbaren Abstand, von der Düse gesteuert, verändert. Dabei wird die Schlauchfolie durch eine Passage geringeren Durchmessers geführt, wobei der Ort und oder Durchmesser der Passage in einstellbarer Zeitfolge veränderbar ist.

EP 0 356 957 A2

## Verfahren und Vorrichtung zur Herstellung von Schlauchfolien

Die Erfindung betrifft ein Verfahren und eine Vorrichtung zur Herstellung von Schlauchfolien, bei denen eine thermoplastische, geschmolzene Kunststoffmasse durch eine ringförmige Düse extrudiert, und die extrudierte Masse unter Bildung einer Blase durch einen Kühlring gekühlt wird, wobei die bereits abgekühlte Schlauchfolie durch Quetschwalzen zusammengedrückt wird.

Derartige Verfahren und Vorrichtungen sind zur Herstellung von Blasfolien allgemein bekannt, wie beispielsweise der DE OS 36 10 488 entnommen werden kann. Die bekannten Verfahren und Vorrichtungen dienen dazu, eine Schlauchfolie mit gleichmäßiger Wandstärke und konstantem Durchmesser zu erzeugen. Die so erzeugten Folien werden in der Regel aufgerollt. Für die spätere Verwendung, beispielsweise zur Auskleidung von zylindrischen Behältern, werden Zuschnitte abgelängt und an einem Ende mit einem Rundboden verschweißt.

Für die Auskleidung von Behältern, die im Querschnitt nicht zylindrisch sind, die also an den Enden einen geringeren Durchmesser aufweisen, sind zylindrische Folien weniger geeignet, da ihr Durchmesser dem größten Durchmesser des Behälters entsprechen muß und sich dann beim Umschlagen am Rand des Behälters Falten bilden, die keine Dichtwirkung durch einen aufgesetzten Deckel zulassen. Diese Übergröße verhindert auch eine faltenfreie Auslegung im Behälter selbst, die für Rühr- oder Rollwerke oft gefordert wird.

Der Erfindung liegt daher die Aufgabe zugrunde, Schlauchfolien herzustellen, die einen variablen Durchmesser aufweisen. Diese Aufgabe wird dadurch gelöst, daß der Durchmesser der bereits abgekühlten Blase in einem einstellbaren Abstand von der Düse gesteuert verändert wird. Diese gesteuerte Veränderung bewirkt, daß sich der Durchmesser des aus der Düse austretenden und an dieser Stelle noch thermoplastisch verformbaren Materials im Durchmesser ändert, und zwar in dem Sinne, daß wenn der bereits verfestigte Schlauchteil zusammengedrückt wird, die Blase in dem nahe der Düse befindlichen Teil einen größeren Durchmesser erhält.

Gemäß einer vorteilhaften Ausbildung der Erfindung wird die bereits abgekühlte Schlauchfolie durch eine Passage geringeren Durchmessers geführt. Der Ort und/oder der Durchmesser dieser Passage ist in einstellbarer Zeitfolge veränderbar. Hierdurch wird erreicht, daß der Durchmesser und die Kontur der aus der Düse austretenden Schlauchfolie die gewünschte Form erhält. Erfindungsgemäß ist es auch möglich, zur Veränderung des Durchmessers der Schlauchfolie die Menge des zugeführten Kühlmediums zu verändern.

Bei Vorrichtungen zur Durchführung des vorbeschriebenen Verfahrens sind zwischen der Extruderdüse und den Quetschwalzen um die Schlauchfolie herum mechanische Glieder angeordnet, deren Abstand von der Schlauchachse und/oder der Extruderdüse einstellbar ist. Gemäß einer besonders vorteilhaften Ausbildung dieser Vorrichtung sind die mechanischen Glieder als kreissektorförmige Bügel ausgebildet. Auf diesen Bügeln können Kunststoffrollen angeordnet sein. Die Bügel können über Spindeln elektromotorisch, pneumatisch oder hydraulisch verstellbar sein und statt der Bügel können auch längs der Achse der Schlauchfolie irisartige Blenden angeordnet sein, deren axialer Stand und Durchmesser veränderbar ist. Die Steuerung dieser mechanischen Glieder erfolgt über eine Programmsteuerung, vorzugsweise elektronisch, mittels Computer.

Mit dem erfindungsgemäßen Verfahren können Schlauchfolien hergestellt werden, die in Längsrichtung gesehen beiderseits des maximalen Durchmessers symmetrisch oder auch unsymmetrisch verlaufen. Hieraus lassen sich Stücke als Behälterauskleidungen abschneiden, die an beiden Rändern gleiche oder verschiedene Durchmesser aufweisen. Auch kann durch geeignete Wahl der Verfahrensparameter der ausgebauchte Teil der Schlauchfolie auf einer bestimmten Länge zylindrisch sein.

Weitere Einzelheiten und Vorteile der Erfindung können den in der Zeichnung dargestellten Ausführungsbeispielen entnommen werden. Es zeigen:

Fig. 1 die prinzipielle Anordnung einer erfindungsgemäßen Vorrichtung;

Fig. 2 die Wirkungsweise dieser Anordnung im Betrieb

Fig. 3 eine Darstellung verschiedener erzielbarer Formen der Schlauchfolie;

Fig. 4 die in Fig. 1 dargestellte Vorrichtung in einer anderen Betriebsweise;

Fig. 5 eine Klemmbügelanordnung in der Draufsicht.

Fig. 6 eine detaillierte Ansicht der Klemmbügelanordnung;

Fig. 7 eine Draufsicht auf die in Fig. 6 dargestellten Klemmbügel;

Fig. 8 ein konkretes Ausführungsbeispiel für eine erfindungsgemäß hergestellte Schlauchfolie mit Maßangaben;

Fig. 9 die aufeinanderfolgende Herstellung der in Fig. 8 dargestellten Schlauchfolie.

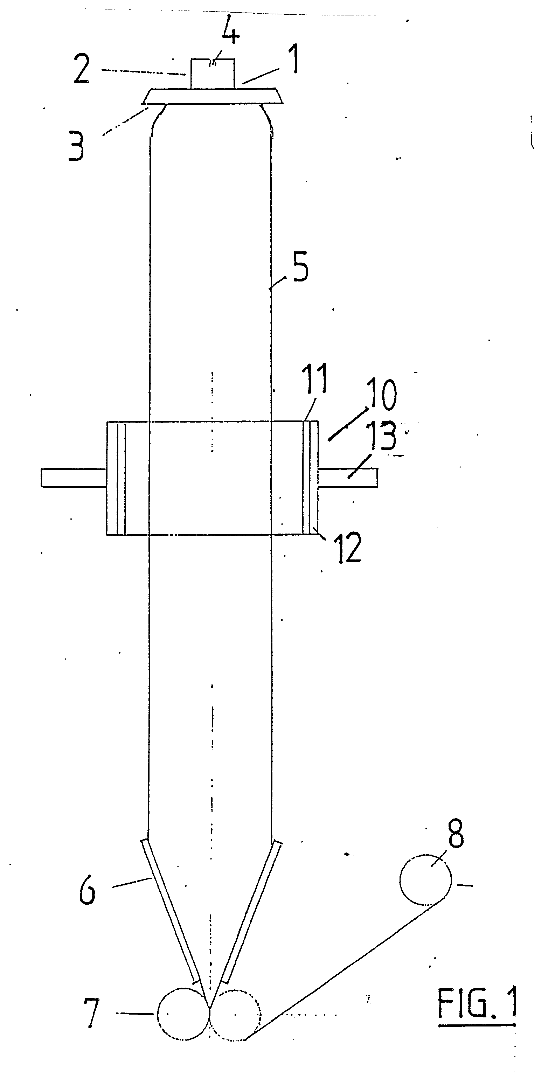

Bei der in Fig. 1 dargestellten Ausführungsform ist in bekannter Weise eine ringförmige Extruderdüse 1 vorgesehen, aus der das erhitzte und durch

Leitung 2 durchgefüte thermoplastische Material austritt. Es wird durch einen Kühlring 3, aus dem Kühlluft ausströmt, in bekannter Weise gekühlt. Durch Einführung von Luft Leitung 4 zu Beginn des Blasvorgangs wird eine Schlauchfolie 5 gebildet, die bei bekannten Vorrichtungen die Form einer zylindrischen Blase hat. Die Zuführungsleitung für die Luft weist ein Rückschlagventil auf. Am unteren Ende der Vorrichtung sind Führungsplatten 6 angeordnet, die die Schlauchfolie 5 führen. Sie wird anschließend durch Quetschwalzen 7 flach zusammengedrückt und auf die Aufwickeltrommel 8 aufgewickelt.

Die erfindungsgemäße Zusatzvorrichtung ist allgemein mit dem Bezugszeichen 10 bezeichnet und ist in den Fig. 1 bis 4 nur schematisch dargestellt. Sie weist nach innen verschiebbare Bügel 11 auf, welche in einem Gehäuse 12 durch eine Betätigungsstange 13 verschiebbar sind. Wird diese Vorrichtung in der in Fig. 1 dargestellten, nicht betätigten Stellung belassen, so entsteht in bekannter Weise eine zylindrische Schlauchfolie 5.

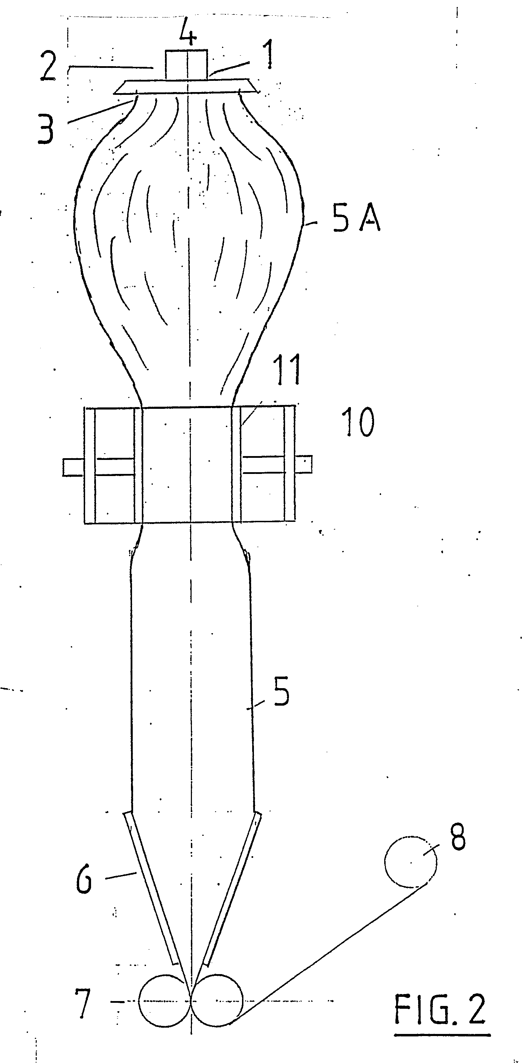

Die Wirkungsweise der erfindungsgemäßen Zusatzvorrichtung 10 ist den Fig. 2 bis 4 zu entnehmen. In Fig. 2 sind die Bügel 11 gemäß einem Programm in bestimmter Zeitfolge und um einen bestimmten Betrag nach innen verschoben worden. Hierdurch wurde ein Teil des in der Schlauchblase 5 vorhandenen Luftvolumens in den oberen Teil der noch nicht erkalteten Schlauchfolie, die aus der Ringdüse 1 austritt, verschoben. Dies bewirkte eine Vergrößerung des Durchmessers der Schlauchfolie, wodurch die mit 5A bezeichnete Form entstand. Die Größe und Form dieses Folienteils 5A hängt von mehreren Parametern ab. Insbesondere werden Form und Größe dieses Folienteils 5A bestimmt durch den Abstand des Bügels 11 von der Düse 1, durch das Maß der Verringerung des Durchmessers der Blase 5 mit Hilfe des Bügels 11 sowie durch die zeitliche Abfolge dieses Vorgangs, d. h. die Geschwindigkeit und Dauer des Zusammendrückens der Blase 5.

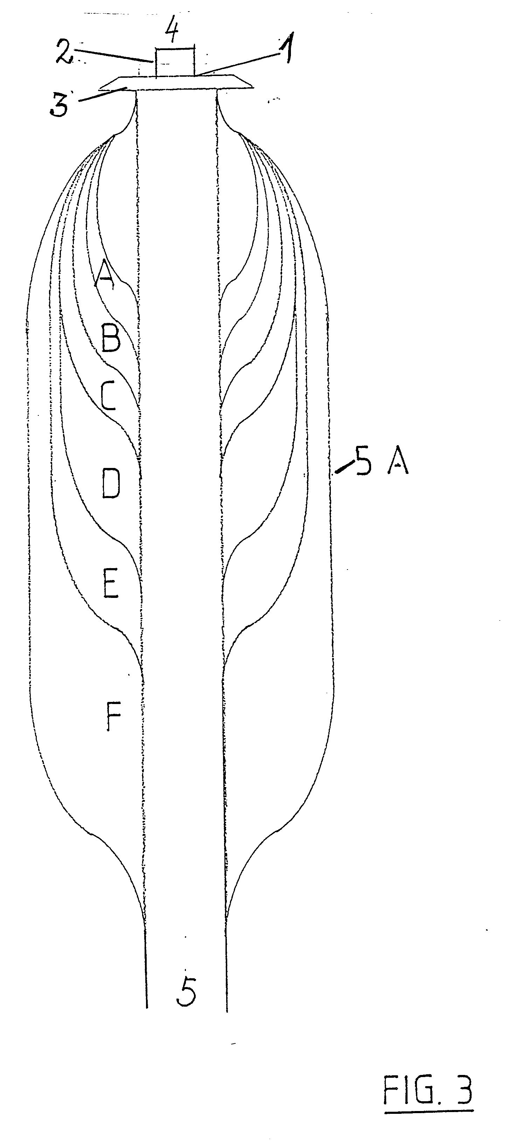

Der Fig. 3 kann entnommen werden, wie in Abhängigkeit von den an der Zusatzeinrichtung 10 eingestellten Parametern verschiedene Formen des Folienschlauchs 5A erzeugt werden können. Sie sind mit A - F bezeichnet.

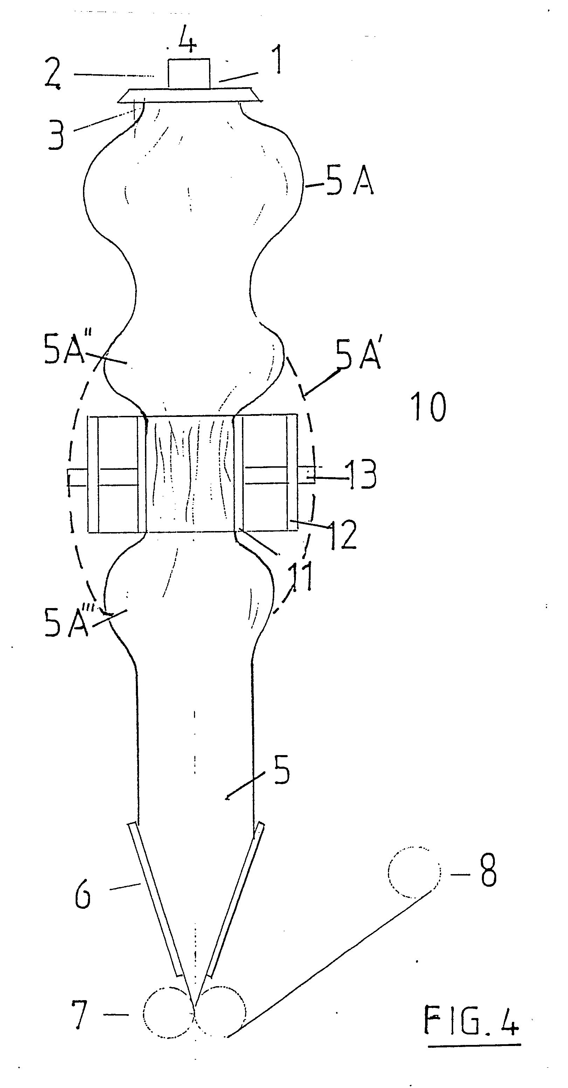

Bei der in Fig. 4 dargestellten Betriebsweise drückt der Bügel 11 der Zusatzeinrichtung 10 auf den im vorherigen Arbeitstakt entstandenen und bereits abgekühlten ausgebauchten Teil 5A', der gestrichelt gezeichnet ist. Hierdurch nimmt die Blase vorübergehend die in der Zeichnung dargestellte Form an, d. h. ober- und unterhalb des Bügels 11 sind im dargestellten Moment je eine kleine Ausbauchung 5A" und 5A'" oberhalb und unterhalb des Bügels 11 zu sehen, Ausbauchungen 5A" und 5A'", die nach Beendigung des Zusammendrückens bzw. nach Vollendung des Durchlaufs durch den Bügel 11 wieder verschwinden. Dadurch nimmt der Folienschlauch die ursprünglich gebildete Form 5A' wieder an bevor er durch die Rollen 7 zusammengedrückt und auf die Aufwickeltrommel aufgewickelt wird. Bei diesem Zusammendrücken hat sich außerdem aus dem aus der Ringdüse 1 austretenden erhitzten thermoplastischen Material die Blase 5A gebildet. In dieser Weise werden fortlaufend derartige ausgebauchte Folien erzeugt und auf die Aufwickeltrommel 8 aufgewickelt.

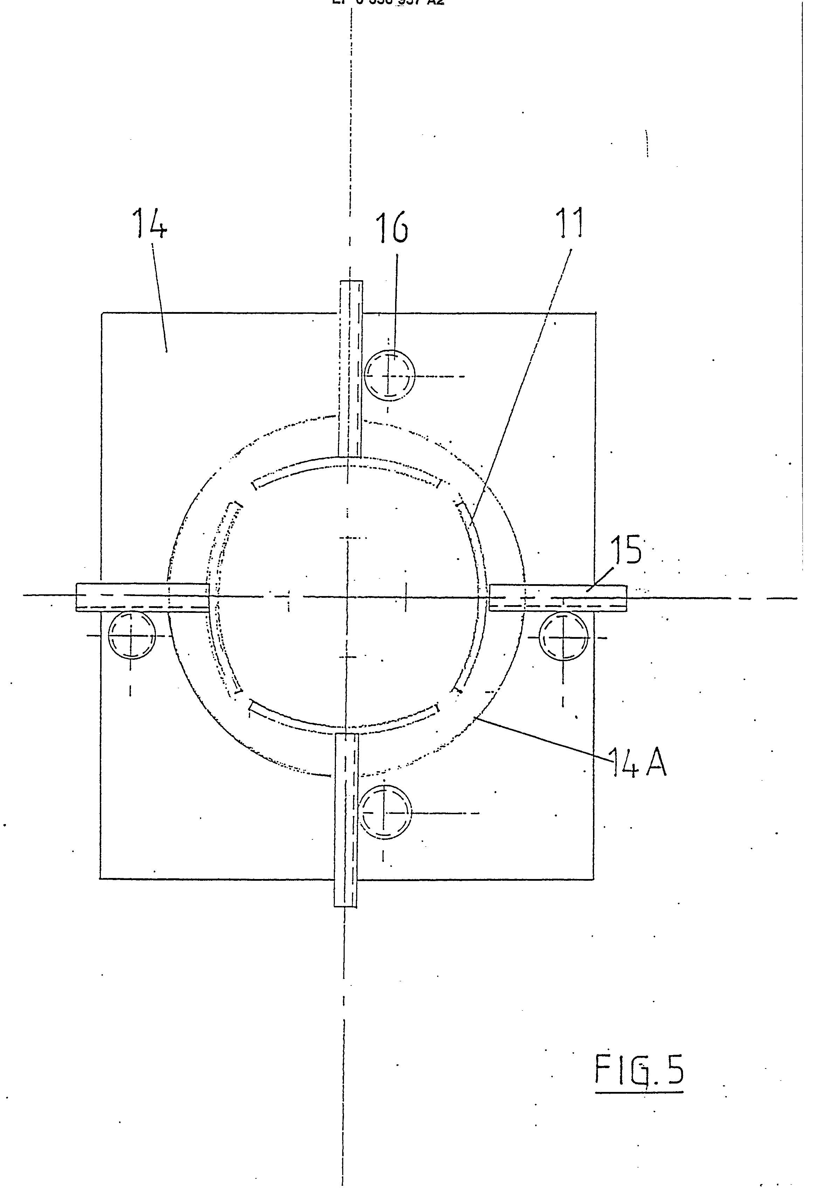

Im folgenden soll nun anhand der Fig. 5, 6 und 7 ein Ausführungsbeispiel für die in den Fig. 1 2 und 4 nur schematisch dargestellte Zusatzvorrichtung 10 im einzelnen beschrieben werden.

Wie der Fig. 5 zu entnehmen ist, sind auf einer Grundplatte 14, die eine kreisförmige Ausnehmung 14A für den Durchgang der Schlauchfolienblase aufweist, (nicht dargestellte) Lager montiert, in denen Zahnstangen 15 parallel zur Ebene der Grundplatte 14 verschiebbar sind, an deren inneren Ende die Bügel 11 befestigt sind. Die Zahnstangen 15 werden dabei von Zahnrädern 16 bewegt, die von programmgesteuerten Elektromotoren angetrieben werden. Bei der dargestellten Ausführungsform sind vier kreisabschnittförmige Bügel vorgesehen. Die Grundplatte 14 kann in bekannter Weise ebenfalls elektromotorisch längs der Achse der zu bildenden Schlauchfolie verschoben, d. h. angehoben oder abgesenkt werden.

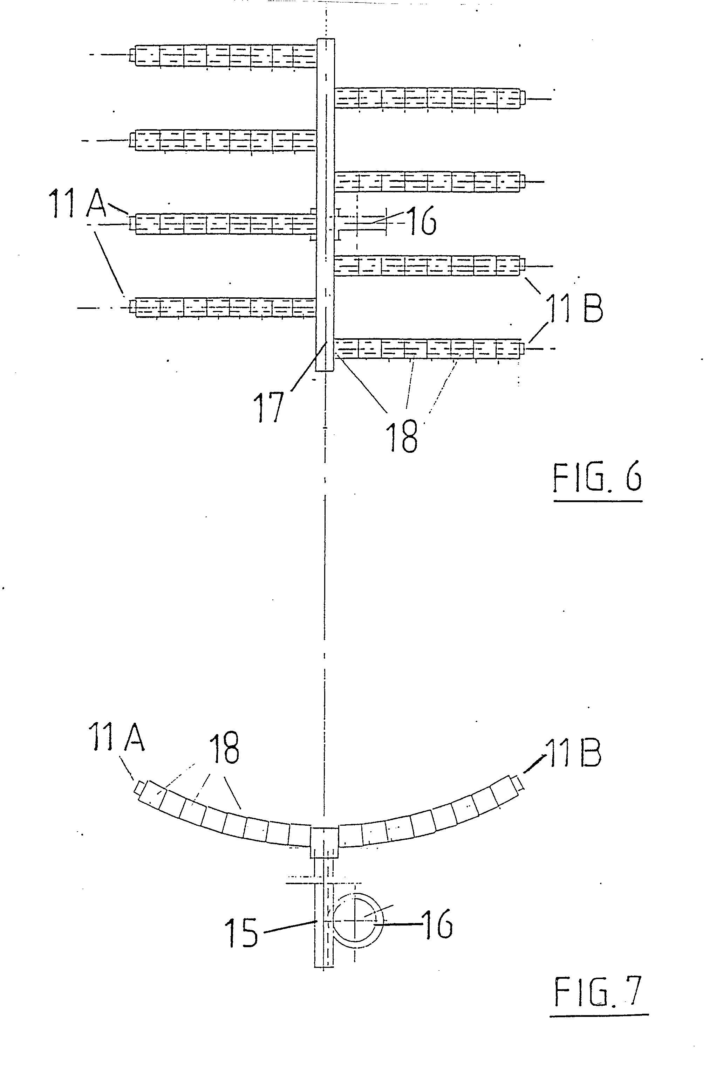

Die Einzelheiten des Aufbaus einer bestimmten und erprobten Form der Bügel 11 sind in den Fig. 5 und 6 dargestellt. Wie diesen Figuren zu entnehmen ist, sind an einer in Richtung Parallel zur Achse des zu bildenden Folienschlauchs verlaufenden Stange 17 die kreisabschnittförmigen Bügel 11A und 11B befestigt. Im dargestellten Ausführungsbeispiel sind je vier derartige Bügel 11A und 11B übereinander angeordnet. Je nach der Form der zu bildenden Folien können mehr oder weniger Bügel verwendet werden. Auf diesen Bügeln 11A und 11B sind Kunststoffrollen 18 drehbar gelagert. Die Stange 17 ist durch die an ihr befestigte Zahnstange 15, die über das Zahnrad 16 angetrieben wird, in einer Richtung quer zur Achse des zu bildenden Folienschlauchs verschiebbar. Die Zahnräder 16 werden im Ausführungsbeispiel, wie bereits beschrieben, elektromotorisch angetrieben. Der Antrieb erfolgt programmgesteuert.

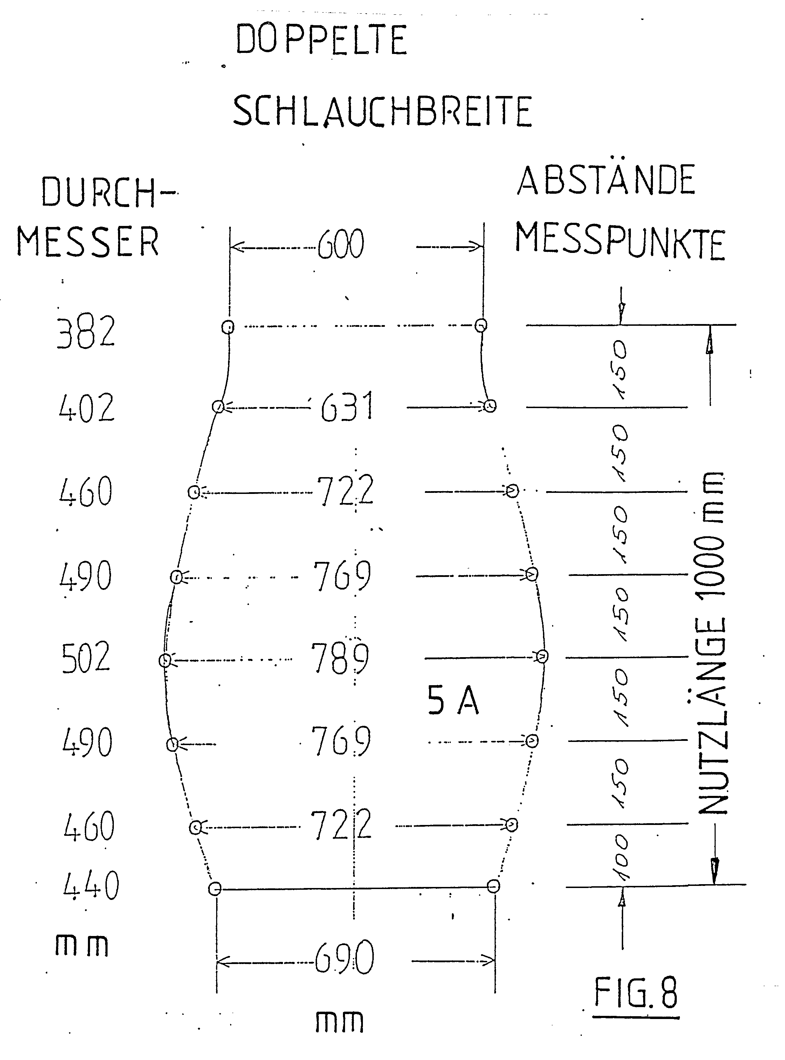

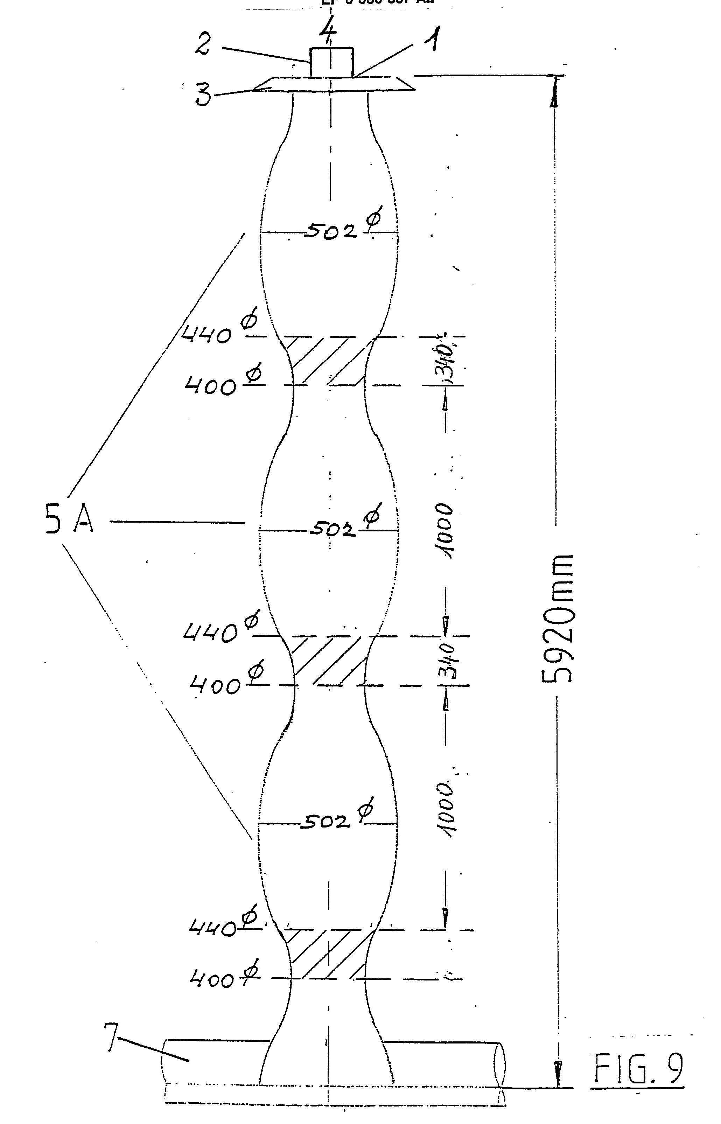

Im folgenden sollen unter Bezugnahme auf die Figuren 8 und 9 noch einige bei der Durchführung des erfindungsgemäßen Verfahrens praktisch gewonnene Daten beispielhaft angeführt werden. Dabei ist in Fig. 8 eine erfindungsgemäß hergestellte Schlauchfolie mit den zugehörigen Maßen dargestellt. Dabei gibt die linke senkrechte Zahlenreihe den Durchmesser der aufgeblasenen Schlauchfolie wieder, die mittlere Zahlenreihe die doppelte Schlauchbreite, wie sie gegeben ist, nachdem die Schlauchfolie durch die Quetschwalzen 7 gelaufen und zusammengedrückt worden ist. Die rechte Spalte gibt die Abstände in Laufrichtung wieder. Die Fig. 9 zeigt, wie die Abschnitte der Schlauchfolie gemäß Fig. 8 bei der Herstellung aufeinander folgen, wobei auf der rechten Seite wieder die Abstände in Längsrichtung dargestellt sind. Das folgende konkrete Ausführungsbeispiel bezieht sich auf diese Figuren.

Beispiel:

Bei Verwendung von Polyäthylen als Ausgangsmaterial wurde durch die ringförmige Extruderdüse 1 ein Folienschlauch 5A erzeugt. Der Abstand zwischen Ringdüse 1 und Quetschwalzen 7 betrug 5920 mm. Die Oberkante der Zusatzeinrichtung 10 hatte einen Abstand von 1480 mm von der Extruderdüse 1. Dabei entstand ohne Betätigung der Zusatzeinrichtung 10 ein Folienschlauch mit einem Durchmesser von 440 mm bzw. 690 mm doppelter Breite und mit einer Foliendicke von 0,145 mm.

Durch Zusammenführen der Bügel 11 der Zusatzeinrichtung 10 auf einen Enddurchmesser von 410 mm innerhalb einer Zeitspanne von 1,4 sec ergab sich ein aufgeweiteter Folienschlauch 5A, dessen maximaler Durchmesser 502 mm bzw. dessen doppelte Breite somit 789 mm betrug. Die Foliendicke betrug hier ca. 0,1 mm. Gleichzeitig verringerte sich der Durchmesser des Folienschlauchs an der der Extruderdüse 1 zugewandten Seite auf 382 mm oder 600 mm doppelte Schlauchbreite. Die Bügel 11 blieben für ein Zeitspanne von 14,1 sec geschlossen und wurden danach wieder innerhalb einer Zeitspanne von 1,2 sec auseinander gezogen.

Der Vorgang wurde in regelmäßigen Abständen von 20,8 sec wiederholt. Die Geschwindigkeit mit der die gebildete Folie auf die Aufwickeltrommel 8 aufgewickelt wurde, betrug 70,9 mm/sec. Die auf diese Weise hergestellte formgeblasene Schlauchfolie soll Behälterauskleidungen ergeben, die oben eine Öffnung mit einem Durchmesser von 382 mm aufweisen, die einen maximalen Durchmesser von 502 mm besitzen und deren unterer Rand einen Durchmesser von 440 mm aufweist, wobei die Länge dieser Auskleidungen 1000 mm beträgt. Um dies sicherzustellen, erhält die Schlauchfolie von der Vorrichtung an der Stelle, an der der Durchmesser 440 mm beträgt, eine Farbmarkierung, die später von einer Fotozelle festgestellt wird, welche das Ablängen steuert. Dabei werden jeweils die im Übergangsbereich zwischen dem unteren Rand eines Folienteils und dem daran anschließenden oberen Rand des benachbarten, bereits vorher gebildeten Folienteils liegenden und in Fig. 9 schraffiert dargestellten Teile abgeschnitten. Sie sind Abfall. Der geforderte Formschlauch, der im Ausführungsbeispiel 1000 mm lang ist und am unteren Rand einen Durchmesser von 440 mm aufweist, kann an dieser Stelle mit einem eingeschweißten Rundboden versehen werden. Werden Folienschläuche hergestellt, deren Folienteile am oberen Rand denselben Durchmesser aufweisen sollen, wie am unteren Rand, so erhält man diese durch Ablängen an der schmalsten Stelle des Folienschlauchs und es entsteht kein Abfall.

Nach dem Einschalten der erfindungsbemäßen Vorrichtung wurde eine Zeit von ca. 4 bis 5 min benötigt, bis die gewünschte Folienform konstant und gleichmäßig hergestellt wurde. Sie blieb dann während der gesamten vielstündigen Produktionszeit konstant.

**Ansprüche**

1. Verfahren zur Herstellung von Schlauchfolien, bei dem eine thermoplastische, geschmolzene Kunststoffmasse durch eine ringförmige Düse extrudiert und die extrudierte Masse unter Bildung einer Blase durch einen Kühlring gekühlt wird, wobei die bereits abgekühlte Blase durch Quetschwalzen zusammengedrückt wird, dadurch gekennzeichnet, daß der Durchmesser der bereits abgekühlten Blase in einem einstellbaren Abstand von der Düse gesteuert verändert wird.

2. Verfahren nach Anspruch 1, dadurch gekennzeichnet, daß die bereits abgekühlte Schlauchfolie durch eine Passage geringeren Durchmessers geführt wird.

3. Verfahren nach Anspruch 2, dadurch gekennzeichnet, daß Ort und/oder Durchmesser der Passage in einstellbarer Zeitfolge veränderbar sind.

4. Verfahren nach Anspruch 1, dadurch gekennzeichnet, daß zur Veränderung des Durchmessers der Schlauchfolie die Menge des zugeführten Kühlmediums veränderbar ist.

5. Vorrichtung zur Durchführung des Verfahrens nach einem der Ansprüche 1 bis 3, dadurch gekennzeichnet, daß zwischen Extruderdüse (1) und Quetschwalzen (7) um die Schlauchfolie (5) mechanische Glieder (10) angeordnet sind, deren Abstand von der Schlauchachse und/oder der Extruderdüse (1) einstellbar ist.

6. Vorrichtung nach Anspruch 5, dadurch gekennzeichnet, daß die mechanischen Glieder (10) kreissektorförmige Bügel (11) sind.

7. Vorrichtung nach Anspruch 6, dadurch gekennzeichnet, daß auf den Bügeln (11) Kunststoffrollen (18) angeordnet sind.

8. Vorrichtung nach Anspruch 5, dadurch gekennzeichnet, daß längs der Achse der Schlauchfolie irisartige Blenden angeordnet sind.

9. Vorrichtung nach Anspruch 6 oder 7, dadurch gekennzeichnet, daß die Bügel (11) oder Irisblenden elektromotorisch, pneumatisch oder hydraulisch verstellbar sind.

10. Vorrichtung nach Anspruch 9, dadurch gekennzeichnet, daß die Verstellung durch Programmsteuerung erfolgt.

FIG. 1

FIG. 2

FIG. 3

FIG. 4

FIG.5

11 A

16

11 B

17

18

FIG. 6

11 A

18

11 B

15

16

FIG. 7

# DOPPELTE

# SCHLAUCHBREITE

| DURCH-MESSER | | ABSTÄNDE MESSPUNKTE |
|---|---|---|

|←——— 600 ———→|

382

402 — 631

460 — 722

490 — 769

502 — 789

5 A

490 — 769

460 — 722

440

mm

|←——— 690 ———→|

mm

150
150
150
150
150
150
150
150
100

NUTZLÄNGE 1000 mm

## FIG. 8

FIG.9